# EUROPÄISCHE PATENTSCHRIFT

(11) **EP 3 325 291 B1**
(45) Veröffentlichungstag und Bekanntmachung des Hinweises auf die Patenterteilung: **04.11.2020**
(21) Anmeldenummer: 16729781.1
(22) Anmeldetag: 17.06.2016
(51) Int. Cl.: B60C 25/05, B60C 25/132, G01M 17/02

(54) **VERFAHREN ZUR MONTAGE EINES KRAFTFAHRZEUGREIFENS AUF EINE FELGE EINES RADES**
METHOD FOR MOUNTING A TIRE TO A RIM OF A WHEEL
PROCEDE POUR MONTER UN PNEU SUR UNE JANTE DE ROUE

(30) Priorität: 23.07.2015 DE 102015009335
(43) Veröffentlichungstag der Anmeldung: 30.05.2018
(73) Patentinhaber: inmess GmbH, 28309 Bremen (DE)
(72) Erfinder: SCHRAUDOLF, Siegfried, 27777 Ganderkesee (DE); NEUMANN, Erwin, 31335 Neustadt (DE)
(74) Vertreter: Aulich, Martin
(86) Internationale Anmeldenummer: PCT/EP2016/001021
(87) Internationale Veröffentlichungsnummer: WO 2017/012684

(56) Entgegenhaltungen:
- DE-A1- 1 773 367
- DE-A1-102004 046 420
- US-A1- 2012 152 467

## Beschreibung

Die Erfindung betrifft ein Verfahren zur Montage eines Kraftfahrzeugreifens auf eine Felge eines Rades. Die Erfindung betrifft des Weiteren eine Vorrichtung, die im Rahmen des Montageverfahrens eingesetzt werden kann und eine Reifenmontageanlage mit einer Aufziehstation zum insbesondere automatischen Aufziehen eines Kraftfahrzeugreifens auf eine Felge eines Rades.

Montageverfahren sowie Montageanlagen zur Montage eines Kraftfahrzeugreifens auf eine Felge eines Rades sind im Stand der Technik bekannt. Sie umfassen insbesondere das sogenannte Aufziehen des Reifens auf die zugeordnete Felge des Rades. Dabei sind hohe Kräfte bzw. Drehmomente notwendig, um die Reifenwulste über die Felgenhörner der Felge zu ziehen. Dies gilt sowohl für im Wesentlichen manuelle als auch für automatische Aufziehverfahren. Hierbei kann es zu Verletzungen der Wulste oder einem Verdrehen derselben kommen.

Die DE 10 2004 046 420 A1 zeigt, im Rahmen des Aufziehens eines Reifens auf eine Felge während des Aufziehvorgangs, nämlich während die Reifenwulste bereits zum Großteil über die Felge gezogen sind, eine Reifenwulst mittels einer Dehnvorrichtung weiter als gewöhnlich zu dehnen, damit auf der Felge montierte Zubehörteile, wie etwa Sensoren, keinen Schaden nehmen.

Die DE 17 73 367 A1 zeigt eine Prüfvorrichtung für Reifen, bei der mittels einer Dehnvorrichtung unter anderem Reifenwulste gedehnt werden, um überprüfen zu können, ob Reifen einer Reifenserie bestimmten Beschaffenheitsmerkmalen entsprechen.

Die gattungsbildende US 2012/0152467 A1 zeigt ein Verfahren und eine Vorrichtung zum Vordehnen von Reifenwülsten, bei dem verfahrbare, zylindrische Spannmittel von innen nach außen verfahren werden und dabei die Reifenwülste unter linienförmiger Anlage dehnen, wobei der Reifen dabei relativ zu den ortsfesten Spannmitteln rotiert wird.

Ausgehend hiervon ist es Aufgabe der vorliegenden Erfindung, das eingangs genannte Montageverfahren weiterzuentwickeln sowie eine Vorrichtung anzugeben, mit der das weiterentwickelte Montageverfahren umsetzbar ist. Weiter ist es Aufgabe der Erfindung, eine Reifenmontageanlage anzugeben, in der das weiterentwickelte Verfahren angewendet werden kann.

Diese Aufgabe wird gelöst durch ein Montageverfahren mit den Merkmalen des Anspruchs 1, eine Vorrichtung mit den Merkmalen des Anspruchs 8 sowie eine Reifenmontageanlage mit den Merkmalen des Anspruchs 9.

Dementsprechend ist es erfindungsgemäß vorgesehen, mindestens einen Reifenwulst, bevor der Reifen auf die Felge des Rades (ein Rad weist neben einer Felge eine sogenannte Schüssel auf) aufgezogen wird, insbesondere bevor die Reifenwulste im Rahmen des eigentlichen Aufziehvorgangs über die Felgenhörner der Felge gezogen werden, gezielt vorzudehnen. Hierdurch kann unter anderem das nachfolgende Aufziehen des Reifens auf die Felge erleichtert werden. Zudem hat sich gezeigt, dass das Vordehnen der Reifenwulste zur Reduzierung von Verdrehungen der Wulste bzw. Wulstkerne und/oder zur Reduzierung von Wulstverletzungen beiträgt.

Dementsprechend werden vor dem Aufziehen des jeweiligen Reifens auf die jeweilige Felge gezielt Dehnungskräfte in den mindestens einen Reifenwulst eingeleitet. Es kann dabei - abhängig von der genauen Ausgestaltung des späteren Aufziehvorgangs - erfindungsgemäß ausreichend sein, nur einen der beiden Reifenwulste eines Reifens vorzudehnen. Es kann allerdings auch zweckmäßig sein, beide Reifenwulste vorzudehnen, entweder gleichzeitig oder nacheinander.

Für die Umsetzung des erfindungsgemäßen Verfahrens sind insbesondere motorisch bzw. von einem entsprechenden motorischen Antrieb bewegte Spannmittel vorgesehen, die über einen Kreisumfang verteilt innen an dem mindestens einen bzw. am jeweiligen Reifenwulst anliegen und zur Dehnung des jeweiligen Reifenwulstes insbesondere gleichmäßig radial nach außen verschoben werden und auf diese Weise in den jeweiligen Reifenwulst Kräfte einleiten.

Erfindungsgemäß erfolgt der Vordehnungsprozess auf einer separaten Vordehnungsvorrichtung oder einer separaten Vordehnungsmaschine, bevor - beispielsweise in einer Reifenmontagewerkstatt - die Reifen jeweils entweder händisch mit Montagewerkzeugen oder teil- oder vollautomatisch in einer Reifenaufziehmaschine auf die Felge aufgezogen werden.

Vorzugsweise wird der Vordehnungsprozess allerdings in einen vollautomatischen Reifenmontageprozess integriert werden. Insbesondere Automobilhersteller sowie Kompletträderlieferanten verfügen über vollautomatische Reifenmontageanlagen, um die von ihnen hergestellten KFZ erstbestücken zu können. In diesem Fall würde stromauf eines in einer an sich bekannten Reifenaufziehstation ablaufenden Prozesses, in dem der jeweilige Reifen automatisch auf die jeweilige Felge aufgezogen wird, automatisch der Vordehnungsprozess erfolgen. Bevorzugt kann hierfür in die Reifenmontageanlage stromauf der Reifenaufziehstation eine eigene Vordehnungsstation integriert werden und der entsprechend vorgedehnte Reifen nach dem Vordehnen automatisch der Aufziehstation zugefördert werden. Grundsätzlich ist es aber auch denkbar, den Vordehnungsprozess unmittelbar in die Aufziehmaschine zu integrieren, wobei er naturgemäß auch in diesem Fall prozesstechnisch stromauf des Aufziehprozesses stattfinden würde.

Das Vordehnen der beiden Reifenwulste erfolgt vorzugsweise gleichzeitig. Zu diesem Zweck können beide Reifenwulste beispielsweise gleichzeitig an den oben erwähnten Spannmitteln anliegen. Denkbar ist aber auch, den Vordehnungsprozess so auszubilden, dass zunächst der erste Reifenwulst vorgedehnt wird und erst später bzw. im Anschluss der zweite Reifenwulst. So ist etwa denkbar, die Spannmittel derart auszubilden, dass jeweils nur ein Reifenwulst an den Spannmitteln anliegen kann, sodass erst nach dem Vordehnen des ersten Reifenwustes der zweite Reifenwulst vorgedehnt werden kann. Hier sind verschiedenste Ausführungsformen denkbar.

Erfindungsgemäß ist vorgesehen, dass der jeweilige Reifenwulst vorgedehnt wird, indem er von einem (insbesondere ungedehnten) Ausgangsdurchmesser zu einem Zieldurchmesser gedehnt wird und bei diesem Zieldurchmesser für die Dauer einer bestimmten Haltezeit gehalten wird, nämlich für mindestens 300 ms (Millisekunden), bevorzugt für mindestens 500 ms.

Im weiteren Ablauf kann vorgesehen sein, dass nach Ablauf dieser Haltezeit der jeweilige Reifenwulst wieder zu seinem Ausgangsdurchmesser zurückgebracht wird. Insbesondere, indem die Dehnungskräfte kontinuierlich, schrittweise oder sprunghaft reduziert werden.

In der konkreten Umsetzung dieses Prozesses könnte zunächst jedes der oben erwähnten Spannmittel unter Mitnahme der außen anliegenden Reifenwulst ausgehend von einer ihm zugeordneten Ausgangsposition, in der keine oder nur geringe Dehnungskräfte in die Reifenwulst eingeleitet werden, bis zu einer jeweils zugeordneten radialen Endposition radial nach außen verfahren werden. In der jeweiligen radialen Endposition verharrt jedes Spannmittel für die Dauer der Haltezeit und wird entsprechend den maximal aufgeweiteten Reifenwulst dort festgehalten. Nach Ablauf der Haltezeit könnte jedes Spannmittel in entgegengesetzte Richtung nach radial innen zurückverfahren werden in eine zugeordnete Position, in der wiederum keine Dehnkräfte oder jedenfalls geringere Dehnkräfte in den Reifenwulst eingeleitet werden, insbesondere in die jeweilige Ausgangsposition. Dabei werden die Spannmittel bevorzugt gleichmäßig nach radial innen und/oder radial außen bewegt.

Vorzugsweise ist die Vorschubgeschwindigkeit, mit der die Spannmittel radial nach außen verfahren werden, mindestens über einen bestimmten Zeitabschnitt konstant.

Die Vorschubgeschwindigkeit kann so gewählt sein, dass sich eine Aufweitungsgeschwindigkeit einstellt, die zwischen 20 mm/min und 800 mm/min liegt, bevorzugt zwischen 100 mm/min und 400 mm/min.

Erfindungsgemäß wird der Dehnungsprozess im Hinblick auf wichtige Parameter kontrolliert/überwach und/oder gesteuert.

Dabei werden entweder die Dehnungskräfte, die zur Vordehnung des jeweiligen Reifenwulstes in diesen eingeleitet werden, während des Dehnungsprozesses (unmittelbar oder mittelbar) gemessen. Dies kann beispielsweise mit Kraftmessdosen oder anderen Kraftmesseinrichtungen geschehen. Wenn die eingeleiteten Dehnungskräfte beispielsweise vorbestimmte, etwa in der Steuerung hinterlegte Grenzwerte überschreiten, kann der Dehnungsprozess dann als fehlerhaft bewertet werden. Gegebenenfalls kann dann vorgesehen sein, den entsprechenden Reifen (automatisch) aus dem Prozess auszuschleusen.

Oder es wird alternativ oder zusätzlich während des Dehnungsprozesses auch der aktuelle Wulstdurchmesser des jeweiligen Reifenwulstes des zu dehnenden Reifens gemessen. Mit Wulstdurchmesser wird dabei der Innendurchmesser des jeweiligen Wulstes bzw. Wulstrings verstanden in seiner Erstreckung senkrecht zur Rotations- bzw. Längsmittelachse des Reifens. Im nicht gedehnten Zustand entspricht dieser annähernd dem Felgendurchmesser einer zu dem Reifen passenden Felge im Wulstsitz dieser Felge. Der Wulstdurchmesser ist dabei im ungedehnten Zustand in der Regel etwas kleiner als der Wulstsitzdurchmesser der Felge, um im montierten Zustand des Reifens ausreichende Spannkräfte zu generieren, die den Reifen bzw. den Reifenwulst jeweils in dem Wulstsitz halten.

Allgemein gesprochen werden die während des Dehnungsprozesses gemessenen Werte, wie etwa die eingeleiteten Dehnungskräfte und/oder der während des Dehnprozesses jeweils aktuell gemessene Wulstdurchmesser mit hinterlegten Soll- oder Grenzwerten verglichen, insbesondere automatisch. Sollte der Vergleich ergeben, dass ein oder mehrere der gemessenen Werte sich oberhalb eines (hinterlegten) Grenzwertes befinden, wird ein entsprechendes Signal erzeugt.

Steuerungstechnisch könnte auch vorgesehen sein, beispielsweise einen Sollwert für einen maximalen Wulstdurchmesser vorzugeben und Dehnungskräfte so lange einzuleiten, bis der vorgegebene Sollwert erreicht ist. Anschließend könnte der Prozess gestoppt werden.

Vorzugsweise werden die gemessenen Werte des Wulstdurchmessers und/oder der Dehnungskräfte in einem elektronischen Datenspeicher gespeichert. Diese können später zur Dokumentation dienen, um nachweisen zu können, dass bestimmte Vorgabe- bzw. Grenzwerte während des Dehnvorgangs nicht überschritten wurden.

Weitere Merkmale der Erfindung ergeben sich aus den beigefügten Patentansprüchen, der nachfolgenden Beschreibung eines bevorzugten Ausführungsbeispiels der Erfindung sowie aus der beigefügten Zeichnung. Darin zeigt:

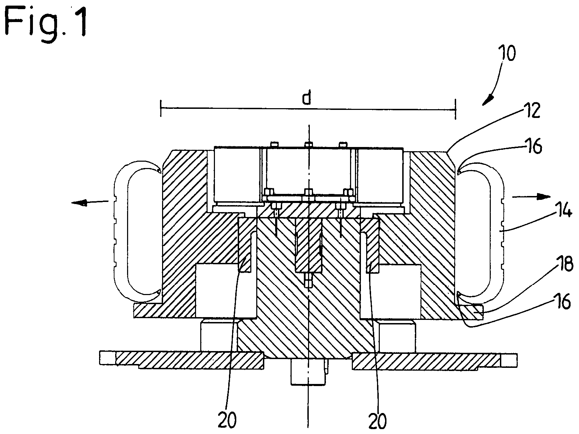

- Fig. 1: eine Ausführungsform einer erfindungsgemäßen Einrichtung zum Vordehnen von Reifenwulsten (im Querschnitt) mit einem von dieser vorzudehnbaren Reifen.

Die Fig. 1 zeigt schematisch eine Vorrichtung 10, mit der Reifenwulste von KFZ-Reifen in erfindungsgemäßer Weise vorgedehnt werden können, bevor sie in an sich bekannter Weise auf eine passende Felge aufgezogen werden.

Die Vorrichtung 10 verfügt zu diesem Zweck über über einen Kreisumfang verteilt angeordnete, als Spannbacken ausgebildete Spannmittel 12, die mittels eines nicht dargestellten Motorantriebs jeweils aus einer radial weiter innen angeordneten Ausgangsposition nach radial weiter außen bewegt werden können. Dies, um dabei einen an den radialen Außenseiten der Spannmittel 12 anliegenden Reifen 14 vorzudehnen bzw. genauer gesagt die beiden Reifenwulste 16 des Reifens 14.

In nicht dargestellter Weise bewegt sich ein zentraler Konus der Vorrichtung 10, der an dazu passend geneigten Innenflächen der Spannmittel 12 anliegt, in vertikaler Richtung und bewegt dadurch - je nachdem, ob er nach oben oder unten verfahren wird - die an ihm anliegenden Spannbacken bzw. Spannmittel 12 jeweils horizontal nach radial weiter innen oder nach radial weiter außen.

In einer Ausgangsposition der Spannmittel 12 sind entlang des Kreisumfangs gegenüberliegend angeordnete Spannmittel 12 in einem Abstand voneinander angeordnet, sodass der Reifen 14 bequem von oben über die Spannmittel 12 gelegt werden kann. In dieser Ausgangsposition werden keine oder bestenfalls geringe Dehnungskräfte auf die Reifenwulste 16 übertragen, sodass der Reifen 14 bzw. die Reifenwulste 16 entsprechend ungedehnt oder nur leicht gedehnt sind. Der in Fig. 1 gezeigte Reifenwulstdurchmesser d entspricht im Normzustand, dass heißt im ungedehnten Zustand, in etwa dem Felgendurchmesser im Wulstsitz einer zu dem Reifen 14 passenden Felge bzw. einer passenden Felge eines Rades aus einer solche Felge und einer entsprechenden Schüssel.

Untere Anschlagflächen 18 der Vorrichtung 10 sorgen dafür, dass der Reifen 14 in seiner in Fig. 1 gezeigten Position verbleibt und nicht weiter nach unten rutschen kann.

Zur Vordehnung der Reifenwulste 16 werden die Spannmittel 12 jeweils aus ihrer jeweiligen Ausgangsposition nach radial außen bewegt (Pfeilrichtungen). Dabei führen sie die Reifwulste 16 nach radial außen mit und leiten auf diese Weise Dehnungskräfte in die Reifenwulste 16 ein.

Der Wulstdurchmesser d vergrößert sich dabei entsprechend.

Es ist vorgesehen, die Reifenwulste 16 im Zuge der Vordehnung kontrolliert und gleichmäßig zu dehnen, bis die Spannmittel 12 jeweils eine bestimmte Endposition einnehmen.

In dieser Endposition des jeweiligen Spannmittels 12 wird der Reifen 14 bzw. werden die Reifenwulste 16 für eine bestimmte Haltezeit t gehalten, beispielsweise 300 ms oder länger, um den Dehnungsvorgang im Hinblick auf das spätere Aufziehen des Reifens 12 auf die passende Felge zu optimieren.

Anschließend werden die Spannmittel 12 aus der entsprechenden Endposition wieder gleichmäßig in ihre jeweilige Ausgangsposition zurückverfahren. Aufgrund der Elastizität der Reifen 14 ziehen sich die Reifenwulste 16 wieder eigenständig zusammen, bis sie sich wieder in ihrem Ausgangszustand befinden. In diesem können die Reifen 14 wieder von der Vorrichtung 10 abgehoben werden. Denn die Ausgangspositionen der Spannmittel 12 sind so gewählt, dass in diesen jeweils keine oder bestenfalls eine nur geringe Dehnung der Reifenwulste 16 erfolgt und damit der Reifen nur mit geringer Spannung oder gänzlich ohne Spannung auf der Maschine 10 sitzt bzw. an den Spannmitteln 12 anliegt.

Mittels Kraftmessmitteln 20, zum Beispiel Kraftmessdosen, werden die während des Aufweitens der Reifenwulste 16 jeweils aktuell eingeleiteten Kräfte bestimmt. Zudem ist denkbar, die aktuellen Werte des Wulstdurchmessers d zu messen. Die Messungen können kontinuierlich, periodisch oder in gewissen Zeitabständen erfolgen.

Zur Dokumentation werden die gemessenen Werte in einem elektronischen Speicher abgelegt, wobei ihnen jeweils eine Kennung des Reifens 14, an dem Messungen durchgeführt wurden, zugeordnet wird, wie etwa eine eindeutige Identifizierungsnummer desselben.

Die gemessenen Werte werden des Weiteren jeweils dahingehend überprüft, ob sie sich in zulässigen Bereichen bzw. innerhalb zulässiger Toleranzen bewegen. Beispielsweise können sie mit einem (oberen) Grenzwert verglichen werden. Sollte beispielsweise die Größe der eingeleiteten Kräfte oder der Wulstdurchmesser d zu einem bestimmten Zeitpunkt einen vorbestimmten Grenzwert erreichen oder übersteigen, würde dies als Fehler erkannt und ein Signal erzeugt werden.

In der Folge könnte der betreffende Reifen 14 als Ausschuss- bzw. fehlerbehafteter Reifen 14 klassifiziert und ausgesondert werden.

Bevorzugt arbeitet die Vorrichtung 10 nach Auflegen des jeweiligen Reifens 14 vollautomatisch. Mit anderen Worten werden die Spannmittel 12 automatisch nach außen in die Endposition verfahren, dort die vorbestimmte Haltezeit t gehalten, und dann wieder vollautomatisch in Gegenrichtung in eine Position, in der keine oder nur geringe Kräfte der Wulste 16 auf die Spannmittel 12 ausgeübt werden, insbesondere in die Ausgangsposition.

Die Vorrichtung 10 kann im Übrigen als einzelne Vorrichtung beispielsweise in Werkstätten benutzt werden, um diese vor dem anschließenden Aufziehen der Reifen auf die Felge durch den jeweiligen Werkstattmitarbeiter (gegebenenfalls unter Zuhilfenahme einer Montagemaschine oder Montagewerkzeugen) vorzudehnen.

Die Vorrichtung 10 kann aber auch Teil einer automatischen Reifenmontageanlage sein, die in der Regel neben einer Seifstation zum Einseifen der Wulste 16 noch über eine Aufziehstation zum Aufziehen der Reifen auf die jeweilige Felge verfügt. Der Prozess kann so ausgebildet sein, dass das Seifen, das Vordehnen, das Montieren und gegebenenfalls das spätere Luftbefüllen der dann auf die Felge aufgezogenen Reifen vollautomatisch erfolgt.

Schließlich kann auch vorgesehen sein, dass die Vorrichtung 10 über eine geeignete Sensorik zur Qualitätsüberwachung der Reifen verfügt. Insbesondere können die mit den Kraftmessmitteln 20 gemessenen Werte im Hinblick auf Qualitätskriterien ausgewertet werden.

### Bezugszeichenliste

- 10: Vordehnungsmaschine
- 12: Spannmittel
- 14: Reifen
- 16: Reifenwulste
- 18: Anschlagfläche
- 20: Kraftmessmittel

## Patentansprüche

1. Verfahren zur Montage eines Kraftfahrzeugreifens (14) auf eine Felge eines Rades, wobei auf einer separaten Vordehnungsmaschine mindestens ein Reifenwulst (16) des Kraftfahrzeugreifens (14) gezielt vorgedehnt wird bevor der Reifen (14) in einer Reifenaufziehmaschine auf die Felge aufgezogen wird, insbesondere bevor die Reifenwulste (16) über die Felgenhörner der Felge gezogen werden, **dadurch gekennzeichnet, dass** der Reifenwulst (16) vorgedehnt wird, indem Spannbacken, die über einen Kreisumfang verteilt innen am Reifenwulst (16) anliegen, bevorzugt gleichmäßig radial nach weiter außen verschoben werden und dabei den Reifenwulst (16) durch Einleiten von Dehnungskräften dehnen, wobei der Reifenwulst (16) dabei von einem Ausgangsdurchmesser bis zu einem Zieldurchmesser gedehnt und bei diesem Zieldurchmesser eine vorbestimmte Haltezeit von mindestens 300 ms gehalten wird, bevorzugt von mindestens 500 ms, wobei während des Dehnungsprozesses der Durchmesser des Reifenwulstes (16) gemessen wird oder die Dehnungskräfte, die zur Vordehnung des Reifenwulstes (16) in diesen eingeleitet werden, und wobei die gemessenen Werte mit hinterlegten Soll- oder Grenzwerten verglichen werden.

2. Verfahren gemäß Anspruch 1, **dadurch gekennzeichnet, dass** die gemessenen Werte in einem insbesondere elektronischen Datenspeicher gespeichert werden.

3. Verfahren gemäß Anspruch 1, **dadurch gekennzeichnet, dass** der mindestens eine Reifenwulst (16) nach Ablauf der Haltezeit wieder zu dem Ausgangsdurchmesser zurückgebracht wird, insbesondere, indem die Dehnungskräfte kontinuierlich, schrittweise oder sprunghaft reduziert werden.

4. Verfahren gemäß Anspruch 1, **dadurch gekennzeichnet, dass** die Spannbacken (12) jeweils nach Erreichen einer radialen Endposition mit maximaler Aufweitung der mindestens einen Reifenwulst (16) zurückgefahren werden in jeweilige Ausgangspositionen mit keiner oder geringerer Aufweitung der Reifenwulst (16), insbesondere in Ausgangspositionen, in denen keine oder entsprechend geringere Dehnungskräfte in den Reifenwulst (16) eingeleitet werden.

5. Verfahren gemäß Anspruch 1, **dadurch gekennzeichnet, dass** die Vorschubgeschwindigkeit, mit der die Spannbacken (12) radial nach weiter außen verfahren werden, so gewählt wird, dass sich eine Aufweitungsgeschwindigkeit einstellt, die zwischen 20 mm/min und 800 mm/min liegt, bevorzugt zwischen 100 mm/min und 400 mm/min.

6. Verfahren gemäß einem oder mehreren der vorhergehenden Ansprüche, **dadurch gekennzeichnet, dass** der mindestens eine Reifenwulst (16) des Reifens (14) mit den Spannbacken (12) zunächst automatisch vorgedehnt wird, und dass der Reifen nach dem Vordehnen der mindestens einen Reifenwulst (16) automatisch auf die Felge aufgezogen wird.

7. Verfahren gemäß einem oder mehreren der vorhergehenden Ansprüche, **dadurch gekennzeichnet, dass** der jeweilige Reifen (14), nachdem dessen mindestens einer Reifenwulst (16) gedehnt wurde, automatisch einer Aufziehvorrichtung zugeführt wird, in der der Reifen auf die Felge aufgezogen wird.

8. Vorrichtung zur Durchführung des Verfahrens gemäß Anspruch 1, mit motorisch bewegbaren Spannmitteln zum gezielten Vordehnen mindestens einer Reifenwulst (16) eines Kraftfahrzeugreifens (14) bevor der Reifen (14) auf eine Felge eines Rades aufgezogen wird.

9. Reifenmontageanlage mit einer Aufziehstation zum automatischen Aufziehen eines Kraftfahrzeugreifens auf eine Felge eines Rades, **dadurch gekennzeichnet, dass** die Reifenmontageanlage über eine im Prozessablauf der Reifenmontageanlage stromauf der Aufziehstation angeordnete, separate Vordehnungsvorrichtung gemäß Anspruch 8 verfügt.

## Claims

1. A method for mounting a motor vehicle tire (14) on a rim of a wheel, wherein at least one tire bead (16) of the motor vehicle tire (14) is prestretched on a separate prestretching machine in a targeted manner before the tire (14) is pulled onto the rim in a tire pulling-on machine, in particular before the tire beads (16) are pulled over the rim flanges of the rim, **characterized in that** the tire bead (16) is prestretched **in that** tensioning jaws, which bear in a distributed manner over a circle circumference on the inside of the tire bead (16), are preferably uniformly radially further outwardly displaced and in so doing stretch the tire bead (16) by introducing stretching forces, wherein the tire bead (16) is thereby stretched from a starting diameter to a target diameter and held at this target diameter for a predetermined holding time of at least 300 ms, preferably at least 500 ms, wherein measurement is made of the diameter of the tire bead (16) during the stretching process or of the stretching forces which are introduced into the tire bead (16) for prestretching the latter, and wherein the measured values are compared with stored desired or limit values.

2. The method as claimed in claim 1, **characterized in that** the measured values are stored in an, in particular electronic, data memory.

3. The method as claimed in claim 1, **characterized in that** after expiry of the holding time, the at least one tire bead (16) is brought back again to the starting diameter, in particular by the stretching forces being reduced continuously, stepwise or abruptly.

4. The method as claimed in claim 1, **characterized in that** the tensioning jaws (12), in each case after reaching a radial end position with maximum widening of the at least one tire bead (16), are moved back into respective starting positions with no or relatively small widening of the tire bead (16), in particular into starting positions in which no or correspondingly relatively small stretching forces are introduced into the tire bead (16).

5. The method as claimed in claim 1, **characterized in that** the advancing speed at which the tensioning jaws (12) are moved radially further outward is chosen such that a widening speed is set which lies between 20 mm/min and 800 mm/min, preferably between 100 mm/min and 400 mm/min.

6. The method as claimed in one or more of the preceding claims, **characterized in that** the at least one tire bead (16) of the tire (14) is at first automatically prestretched by the tensioning jaws (12), and **in that**, after prestretching the at least one tire bead (16), the tire is pulled automatically onto the rim.

7. The method as claimed in one or more of the preceding claims, **characterized in that,** after its at least one tire bead (16) has been stretched, the respective tire (14) is fed automatically to a pulling-on device in which the tire is pulled onto the rim.

8. A device for carrying out the method as claimed in claim 1, having motor-movable, tensioning means for the targeted prestretching of at least one tire bead (16) of a motor vehicle tire (14) before the tire (14) is pulled onto a rim of a wheel.

9. A tire-mounting installation having a pulling-on station for the automatic pulling of a motor vehicle tire onto a rim of a wheel, **characterized in that** the tire-mounting installation has a separate pre-stretching device pursuant to claim 8 arranged upstream of the pulling on station in the process sequence of the tire-mounting installation.

## Revendications

1. Procédé de montage d'un pneumatique de véhicule automobile (14) sur une jante d'une roue, dans lequel au moins un talon de pneu (16) du pneumatique de véhicule automobile (14) est spécifiquement préétiré sur une machine de préétirage séparée avant que le pneu (14) ne soit monté sur la jante dans une machine de montage de pneus, en particulier avant que les talons de pneu (16) ne soient montés sur les rebords de jante de la jante, **caractérisé en ce que** le talon de pneu (16) est préétiré par le fait que des mâchoires de serrage, qui s'appliquent de manière répartie sur une périphérie circulaire à l'intérieur contre le talon de pneu (16), sont déplacées radialement davantage vers l'extérieur de préférence uniformément et en l'occurrence étirent le talon de pneu (16) par introduction de forces d'étirement, le talon de pneu (16) étant en l'occurrence étiré depuis un diamètre de départ jusqu'à un diamètre cible et étant maintenu à ce diamètre cible pendant un temps de maintien prédéterminé d'au moins 300 ms, de préférence d'au moins 500 ms, pendant le processus d'étirage, le diamètre du talon de pneu (16) étant mesuré ou les forces d'étirage qui sont introduites dans le talon de pneu pour le préétirage du talon de pneu (16), les valeurs mesurées étant comparées à des valeurs de consigne ou des valeurs limites consignées.

2. Procédé selon la revendication 1, **caractérisé en ce que** les valeurs mesurées sont mémorisées dans une mémoire de données notamment électronique.

3. Procédé selon la revendication 1, **caractérisé en ce que** l'au moins un talon de pneu (16) est ramené au diamètre initial après l'écoulement du temps de maintien, en particulier en réduisant les forces d'étirage de manière continue, progressive ou par incréments.

4. Procédé selon la revendication 1, **caractérisé en ce que** les mâchoires de serrage (12), à chaque fois après l'obtention d'une position finale radiale d'élargissement maximal de l'au moins un talon de pneu (16), sont ramenées dans des positions de départ respectives avec aucun élargissement ou un faible élargissement du talon de pneu (16), en particulier dans des positions de départ dans lesquelles aucune force d'étirement ou des forces d'étirement plus faibles correspondantes sont introduites dans le talon de pneu (16).

5. Procédé selon la revendication 1, **caractérisé en ce que** la vitesse d'avance avec laquelle les mâchoires de serrage (12) sont déplacées radialement davantage vers l'extérieur est choisie de telle sorte qu'une vitesse d'élargissement s'établisse, laquelle est située entre 20 mm/min et 800 mm/min, de préférence entre 100 mm/min et 400 mm/min.

6. Procédé selon l'une quelconque ou plusieurs des revendications précédentes, **caractérisé en ce que** l'au moins un talon de pneu (16) du pneu (14) est préétiré d'abord automatiquement avec les mâchoires de serrage (12) et **en ce que** le pneu, après le préétirage de l'au moins un talon de pneu (16), est automatiquement monté sur la jante.

7. Procédé selon l'une quelconque ou plusieurs des revendications précédentes, **caractérisé en ce que** le pneu respectif (14), après que son ou ses talons de pneu (16) ont été étirés, est automatiquement acheminé à un dispositif de montage dans lequel le pneu est monté sur la jante.

8. Dispositif pour mettre en œuvre le procédé selon la revendication 1, comprenant des moyens de serrage pouvant être déplacés par moteur pour le préétirage spécifique d'au moins un talon de pneu (16) d'un pneumatique de véhicule automobile (14) avant que le pneu (14) ne soit monté sur une jante d'une roue.

9. Installation de montage de pneus avec un poste de montage pour monter automatiquement un pneumatique de véhicule automobile sur une jante d'une roue, **caractérisée en ce que** l'installation de montage de pneus dispose d'un dispositif de préétirage séparé selon la revendication 8, disposé en amont du poste de montage au cours du déroulement du processus de l'installation de montage de pneus.
